(19) Europäisches Patentamt
European Patent Office
Office européen des brevets

(11) EP 0 943 935 A2

(12) **EUROPEAN PATENT APPLICATION**

(43) Date of publication:
**22.09.1999 Bulletin 1999/38**

(51) Int. Cl.$^6$: **G02B 6/138**, B29D 11/00

(21) Application number: **99302041.1**

(22) Date of filing: **17.03.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.03.1998 JP 7232598**

(71) Applicant:
**Nippon Telegraph and Telephone Corporation**
**Tokyo 163-8019 (JP)**

(72) Inventor:
**Tomaru, Satoru,**
**Nippon Teleg. and Telep. Corp.**
**Tokyo 163-8019 (JP)**

(74) Representative:
**Hutchinson, Glenn Stanley (GB)**
**Dibb Lupton Alsop**
**Fountain Precinct**
**Balm Green**
**Sheffield S1 1RZ (GB)**

(54) **Optical waveguide and method for production thereof**

(57) A film of a polymer obtained by ultraviolet curing a photosensitive substance (A, D), which has a reactive oligomer containing at least one epoxy ring as one of components, and which has a viscosity adjusted to 500 cps to 10,000 cps, is used as a core (9, 17) or a cladding (5, 10, 13, 18). By this measure, an optical waveguide satisfying both of a low price and high performance, and a method for producing the same are provided.

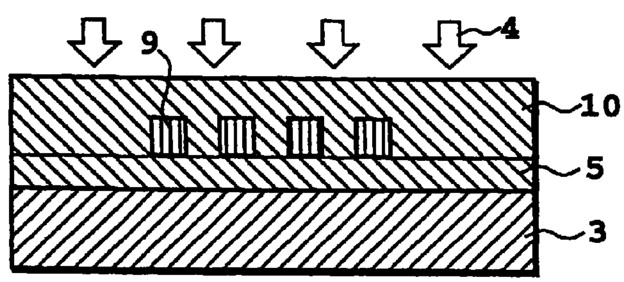


FIG.10

EP 0 943 935 A2

## Description

This invention relates to an optical waveguide which can be utilized in various integrated optics or optical distributing boards used in the fields of general optics or microoptics, and also in the fields of optical communication and optical information processing, and a method for producing the optical waveguide.

Optical waveguides for use in the fields of optical information processing and optical communication have been eagerly studied in recent years in attempts to achieve their integration, miniaturization, upgraded functions, and low prices. Actually, silica-based optical waveguides have come into practical use in part of the optical communication field (Kawachi M., NTT R&D, vol. 43, No. 11, 101 (1994)). Study of polymer waveguides, for which simple manufacturing methods can be chosen using inexpensive materials, is also energetically conducted. Among methods for producing optical waveguides comprising polymeric materials are a photolocking or selective photopolymerization method which incorporates a monomer into a polymeric material, and causes a reaction of the monomer upon irradiation with light to induce a difference in refractive index from the non-irradiated areas (Kurokawa et al., Applied Optics, Vol. 17, 646, 1978); the application of a method for use in processing of a semiconductor, such as lithography or etching (Imamura et al., Electronics Letter, Vol. 27, 1342, 1991); and a method using a photosensitive polymer or a photoresist (Trewhella et al., SPIE, Vol. 1177, 379, 1989). The method of using the photosensitive polymer to form a core ridge for a waveguide, in particular, is simple in procedure, and suitable for cost cutting. However, the transparency of the photosensitive polymer is insufficient, and may cause a high absorption loss. The resulting core ridge is nonuniform in shape, and unsatisfactory in reproducibility, thereby occasionally causing a high scattering loss. This method, therefore, has been unsuccessful in obtaining an optical waveguide whose waveguide characteristics are comparable to those of a silica-based optical waveguide.

The present invention has been made under the above-mentioned circumstances. Its object is to provide an optical waveguide which satisfies both of a low price and high performance by use of a polymeric material, and a method for producing the same.

To attain this object, an optical waveguide according to claim 1 of the invention comprises a core or a cladding which is a film of a polymer obtained by ultraviolet curing a photosensitive substance, wherein the photosensitive substance comprises a mixture of two or more of reactive oligomers and a photopolymerization initiator, the reactive oligomers each contains at least one epoxy ring, at least one of the reactive oligomers in the mixture contains an aromatic ring, the refractive index of the polymer can be controlled by changing the content of the at least one reactive oligomer, and the photosensitive substance has a viscosity adjusted to 500 cps to 10,000 cps.

An optical waveguide according to claim 2 of the invention is the optical waveguide of claim 1, wherein one of the reactive oligomers constituting the photosensitive substance is expressed by the following general formula (I)

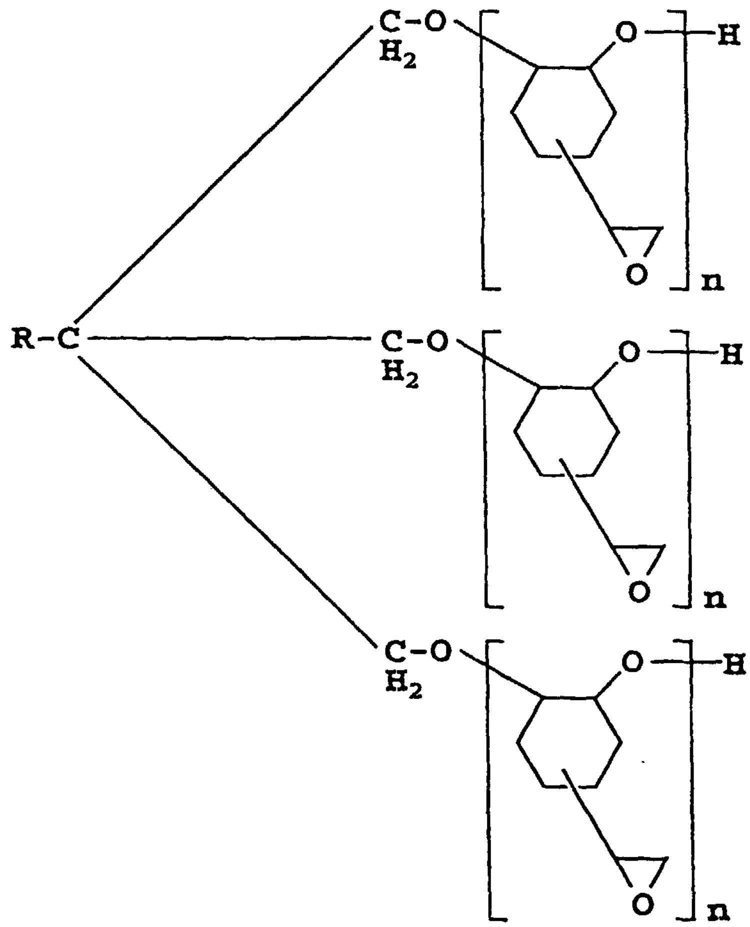

(I)

where R is $C_mX_{2m+1}$, where m is a natural number, and X is a hydrogen atom, a heavy hydrogen atom, or a halogen group, and n is a natural number, and the viscosity of the photosensitive substance can be adjusted by changing the content of the one reactive oligomer.

An optical waveguide according to claim 3 of the invention is the optical waveguide of claim 1, wherein the at least one reactive oligomer constituting the photosensitive substance contains the aromatic ring of the following general formula (II)

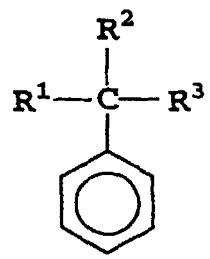

(II)

where $R^1$, $R^2$ and $R^3$ are $C_mX_{2m+1}$ or $C_6X_{5-n}Y_n$, where m and n are each a natural number, and X and Y are a hydrogen atom, a heavy hydrogen atom, or a halogen group, and $R^1$, $R^2$ and $R^3$ each have at least one epoxy ring, and the refractive index of the polymer has been controlled by changing the content of the at least one reactive oligomer.

A method for producing an optical waveguide according to claim 4 of the invention comprises:

forming an under cladding layer from a film of a polymer prepared by irradiating a photosensitive substance with light, the photosensitive substance being the photosensitive substance described in claim 1, or a photosensitive substance containing the reactive oligomer of the general formula (I), or a photosensitive substance containing the

reactive oligomer of the general formula (II);

then forming on the under cladding layer a layer of the photosensitive substance described in claim 1, or a photosensitive substance containing the reactive oligomer of the general formula (I), or a photosensitive substance containing the reactive oligomer of the general formula (II), each photosensitive substance being to have a refractive index adjusted to become higher than that of the under cladding layer when polymerised by irradiation with light;

irradiating the layer of the photosensitive substance with condensed light through a mask, or directly, to form a latent image in a pattern form, followed by removing non-irradiated areas with a solvent to form a pattern for use as a core portion for passage of light; and

then coating the core portion, and an upper portion in the surroundings thereof, with the photosensitive substance described in claim 1, or a photosensitive substance containing the reactive oligomer of the general formula (I), or a photosensitive substance containing the reactive oligomer of the general formula (II), each photosensitive substance being to have a refractive index adjusted to become lower than that of the core portion when polymerized, and polymerizing the coated photosensitive substance by irradiation with ultraviolet light to form an upper cladding layer.

The above and other objects, effects, features and advantages of the present invention will become more apparent from the following description of embodiments thereof taken in conjunction with the accompanying drawings.

Fig. 1 is a graph showing the relation between the viscosity and the film thickness of a resin material constituting the optical waveguide of the present invention;

Fig. 2 is a sectional view showing the relation of the relative optical waveguide core diameter to the optical fiber diameter, intended to illustrate the present invention;

Fig. 3 is a graph showing the relation between the core diameter and the coupling loss in an example of coupling of an optical fiber core and an optical waveguide, intended to illustrate the present invention;

Fig. 4 is a graph showing the relation between the viscosity of a resin material constituting the optical wavelength of the present invention and the uniformity of its film thickness, intended to illustrate the present invention;

Fig. 5 is a sectional view of a substrate having an under cladding layer, intended to illustrate a first embodiment of the present invention;

Fig. 6 is a sectional view of the substrate having a material coating layer, intended to illustrate the first embodiment of the present invention;

Fig. 7 is a sectional view of the substrate having the material coating layer that has been capped with a mask and irradiated with UV light, intended to illustrate the first embodiment of the present invention;

Fig. 8 is a plan view of the mask, intended to illustrate the first embodiment of the present invention;

Fig. 9 is a sectional view of the substrate on which a ridge pattern has been formed, intended to illustrate the first embodiment of the present invention;

Fig. 10 is a sectional view of an optical waveguide formed by the first embodiment of the present invention, intended to illustrate the first embodiment of the present invention;

Fig. 11 is a sectional view of a substrate having an under cladding layer, intended to illustrate a fifth embodiment of the present invention;

Fig. 12 is a sectional view of the substrate having a material coating layer, intended to illustrate the fifth embodiment of the present invention;

Fig. 13 is a sectional view of the substrate having the material coating layer that has been capped with a mask and irradiated with UV light, intended to illustrate the fifth embodiment of the present invention;

Fig. 14 is a plan view of the mask, intended to illustrate the fifth embodiment of the present invention;

Fig. 15 is a sectional view of the substrate on which a ridge pattern has been formed, intended to illustrate the fifth embodiment of the present invention; and

Fig. 16 is a sectional view of an optical waveguide formed by a second embodiment of the present invention, intended to illustrate the fifth embodiment of the present invention.

The inventors found that the reactive oligomer-containing photosensitive substance described in claim 1 was able to form a pattern. Furthermore, this photosensitive substance was found to be excellent in a pattern forming ability in comparison with conventional photosensitive substances. Utilizing these findings, the inventors accomplished the present invention. That is, this invention is based on the fact that a film of a material having a viscosity controlled to 500 to 10,000 cps is irradiated with light, whereby the film is cured, and then the cured film is developed with a suitable solvent to form a pattern having steep, smooth wall surfaces. By using this pattern as a core ridge of a waveguide, the optical waveguide of the present invention is achieved.

Optical waveguides having various core sizes suited to optical fibers may be conceived. In producing an optical waveguide by the method described in claim 4 of the invention, there is need to apply a uniform film thickness in order

to realize a variety of optical waveguides. Different methods are available for applying a film. Spin coating is simple, and preferred for the preparation of a high quality film. Thus, the number of revolutions in spin coating and the duration of spin coating were investigated to form, for example, a 50 μm thick film necessary for a multi-mode optical waveguide. As a result of investigation, the core material was found to require a viscosity of 500 cps or more so that a film with a thickness of 50 μm or more could be formed, as shown in Fig. 1, at about 1,000 rpm within the scope of the spin coating conditions in common use. A photosensitive substance containing the reactive oligomer of the general formula (I) has a viscosity which can be controlled by the content of the reactive oligomer of the general formula (I). Table 1 shows the relation between the content and the viscosity. This data was used as reference for achieving the film thickness, shown in Fig. 1, by spin coating.

Table 1

| Content (wt. %) | 10 | 20 | 25 | 30 | 40 | 50 |
|---|---|---|---|---|---|---|
| Viscosity (cps) | about 500 | 1,000 | 2,000 | 2,000 | 7,000 | 10,000 |

Generally, it has been found that the higher the viscosity is, the larger the film thickness can be made; however, the uniformity of the film thickness varies, and as the viscosity is increased, the uniformity decreases.

If coupling between an optical fiber and an optical waveguide is considered, it is necessary to suppress both of the coupling loss itself and variations in the coupling loss. The coupling loss and variations in the coupling loss that result from misalignment between the optical fiber and the optical waveguide can be suppressed by performing alignment with high accuracy. Assume that there is no misalignment. In this case, the coupling loss depends mainly on the relative sizes of the core of the optical fiber and the core of the optical waveguide. When light is incident on a rectangular optical waveguide from an optical fiber with a nearly constant core diameter, the coupling loss is considered, with the size of the optical waveguide core relative to the optical fiber core being classified into the following three types: a size not smaller than a size in which a closed line defined by the optical waveguide core circumscribes a closed line defined by the optical fiber core; a size not larger than a size in which a closed line defined by the optical waveguide core is inscribed in a closed line defined by the optical fiber core; and a size intermediate between these sizes. To minimize the magnitude of the coupling loss itself for these three types, the size of the optical waveguide core needs to be either the size not smaller than the size in which the closed line defined by the optical waveguide core circumscribes the closed line defined by the optical fiber core, or the size intermediate between the circumscriptive size and the inscriptive size. With the size not smaller than the size in which the closed line defined by the optical waveguide core circumscribes the closed line defined by the optical fiber core, variations in the size of the optical waveguide core, if any, would not affect variations in the coupling loss. Thus, the influence of the variations will occur if the size of the optical waveguide core Cg relative to the optical fiber core Cf is in a range intermediate between the circumscriptive size and the inscriptive size, as shown in Fig. 2. Variations for this range should be considered.

Let the coupling loss in this case be L (dB), which is given by

$$L = 10 \log\left[1-\frac{4}{\pi}\left\{\cos^{-1}(1+x) - (1+x)\sqrt{-x^2-2x}\right\}\right] \quad (I)$$

where x represents the percentage of variations in the core diameter of the optical waveguide to the core diameter of the optical fiber. That is, if the core diameter of the optical fiber is designated as $D_1$, and one side of the optical waveguide core with a rectangular cross section as $D_2$, then $x = (D_2 - D_1)/D_1$. Generally, the use of an optical waveguide results in a coupling loss of within 0.5 dB. Thus, variations in the coupling loss should also be kept within 0.5 dB. The range of x for restricting variations in the coupling loss to within 0.5 dB was determined next.

Variations in the coupling loss versus variations, x, in the core diameter of the optical waveguide relative to the core diameter of the optical fiber are depicted in Fig. 3. As shown in Fig. 3, the variation of the optical waveguide core diameter must be made 13% or less in order to restrict variations in the connecting loss to within -0.5 dB. The uniformity of the core diameter is related to the uniformity of the film thickness and the uniformity of the core width. The range of the viscosity in which the uniformity of the film thickness of within 13% could be obtained was examined. The examination showed such viscosity range to be 10,000 cps or less, as revealed in Fig. 4. Variations in the core width after patterning of a material having this viscosity range occur at the time of exposure to light. The variations in the core width depend partly on the exposure conditions, and when the exposure was optimized, these variations were found to be sufficiently not more than 13%. That is, the uniformity of the film thickness governs the connecting loss.

The above findings demonstrate that with the materials described in claims 1 and 2 of the present invention, when the viscosity is adjusted to a range from 500 cps to 10,000 cps, an optical waveguide having a core diameter of 50 μm or more necessary for a multi-mode optical waveguide and involving variations in the connecting loss within 0.5 dB can be patterned with high reproducibility.

One of the factors for increasing the optical waveguide-optical fiber connecting loss is poor matching in the refractive index difference. In the present invention, the refractive index of the polymer constituting the optical waveguide can be changed up to 4% by varying the content of the reactive oligomer containing the aromatic ring expressed by the general formula (II) indicated below. That is, the refractive index difference of the optical waveguide can be matched to the refractive index difference of the corresponding optical fiber that ranges from the refractive index difference of 0.25% for a silica-based single-mode optical fiber to the refractive index difference of 1% for a silica-based multi-mode optical fiber, and further to the refractive index difference of 4% for a plastic cladding optical fiber.

The features of the optical waveguide according to the present invention will be enumerated below.

(i) The photosensitive substance containing reactive oligomers in the present invention are in liquid form before being photocured, and can afford a highly uniform polymer. Thus, it can form an optical waveguide which has excellent light transmission characteristics for light in the ultraviolet and visible regions, which has sufficient resolution even when the film cured by irradiation with light is thick, and which involves little scattering loss.

(ii) The photosensitive substance containing reactive oligomers in the present invention are in liquid form before being photocured. Hence, it can easily form a film which is flat even on a substrate with irregularities, which extends osmotically, and which can take various shapes, thus forming a variety of optical waveguides.

(iii) The photosensitive substance containing reactive oligomers in the present invention can form an optical waveguide with small birefringence, because the oligomers are connected randomly and cured.

(iv) The photosensitive substance containing reactive oligomers in the present invention can give a suitable viscosity adapted to a thin film forming step. Thus, when a waveguide is to be prepared by the waveguide production method described in claim 4 of the invention, a material having a viscosity adjusted to 500 to 10,000 cps, in particular, can make the shape of the core nearly rectangular, thus giving waveguide characteristics with high uniformity.

(v) The photosensitive substance containing reactive oligomers in the present invention is prepared from a mixture of several oligomer materials. Thus, the refractive indices of the core and the cladding that constitute the optical waveguide of the invention can be controlled extensively.

The polymerization of the reactive oligomers used for the optical waveguide of the invention is performed by the reaction upon exposure to light between the reactive groups contained in the components. To cause the reaction sufficiently efficiently, the addition of a photopolymerization initiator is required. The photopolymerization initiator may be the ones commonly used as photopolymerization initiators. For example, publicly known compounds known to be effective for epoxy resins, such as diazonium salts, sulfonium salts, iodonium salts, and selenium salts, can be arbitrarily selected and used.

The diazonium salts can be expressed by the general formula A: $Ar\text{-}N_2{+}X\text{-}$ where Ar denotes a group such as an ortho-, meta- or para-nitrophenyl, -methoxyphenyl, 2,5-dichlorophenyl, p-(n-morpholino)phenyl, or 2,5-diethoxy-4(p-trimercapto)phenyl, and X- denotes an anion, such as $BF_4$-, $FeCl_4$, $PF_4$, $AsF_6$-, or $SbF_6$-.

Examples of the sulfonium salts are bis-[4-(diphenylsulfonyl)phenyl] sulfido-bis-hexafluorophosphate, bis-[4-(diphenylsulfonium)phenyl] sulfido-bis-hexafluoroantimonate, and the compounds described on page 15, line 24 to page 18, line 1 of Japanese Patent Publication No. 42688/84.

Examples of the iodonium salts are di-(4-ter-butylphenyl) iodonium hexafluorophosphate, di- (4-ter-butylphenyl) iodonium hexafluoroantimonate, and the compounds described on page 11, line 28 to page 12, line 30 of Japanese Patent Publication No. 42688/84.

Examples of the selenium salts are triphenylselenium hexafluoroantimonate, triphenylselenium 4-ter-butylphenyldiphenyltetrafluoroborate, and triphenylselenium 2,3-dimethylphenyldiphenylantimonate.

Examples of the compounds used in combination with the compound of the general formula (I) in claim 1 of the invention are alicyclic epoxy compounds such as 3,4-epoxycyclohexylmethyl-3,4-epoxycyclohexanecarboxylate, 3,4-epoxycyclohexylethyl-8,4-epoxycyclohexanecarboxylate, vinylcyclohexene dioxide, allylcyclohexene dioxide, 8,4-epoxy-4-methylcyclohexyl-2-propylene oxide, 2-(3,4-epoxycyclohexyl-5, 5-spiro-3, 4-epoxy) cyclohexane-m-dioxane, bis(3,4-epoxycyclohexyl) adipate, bis(3,4-epoxycyclohexylmethyl) adipate, bis(3,4-epoxycyclohexyl) ether, bis(3,4-epoxycyclohexylmethyl) ether, and bis(3,4-epoxycyclohexyl) diethylsiloxane; and epoxy compounds such as polybutadiene diglycidyl ether, poly-1,4-(2,3-epoxybutane)-CO-1,2-(8,4-epoxy)-CO-1,4-butadiene diol, neopentyl glycol diglycidyl ether, 1,6-hexanediol diglycidyl ether, polyethylene glycol diglycidyl ether, polypropylene glycol diglycidyl ether, dibromoneopentyl glycol diglycidyl ether, o-phthalic acid glycidyl ester, trimethylolpropane polyglycidyl ether, diglycerol polyglycidyl ether, polyglycerol polyglycidyl ether, sorbitol polyglycidyl ether, allylglycidyl ether, 2-ethylhexylglycidyl

ether, phenylglycidyl ether, phenolpenta(oxyethylene)glycidyl ether, p-tert-butylphenylglycidyl ether, dibromophenylglycidyl ether, lauryl alcohol pentadeca(oxyethylene)glycidyl ether, sorbitan polyglycidyl ether, pentaerythri-4-tol polyglycidyl ether, triglycidyl tris(2-hydroxyethyl)isocyanurate, resorcin diglycidyl ether, polytetramethylene glycol diglycidyl ether, adipic acid diglycidyl ester, hydroquinone diglycidyl ether, bisphenol S diglycidyl ether, terephthalic acid diglycidyl ester, glycidyl phthalimide, dibromophenyl glycidyl ether, dibromoneopentyl glycol diglycidyl ether, cetylglycidyl ether, stearylglycidyl ether, p-octylphenylglycidyl ether, p-phenylphenylglycidyl ether, glycidyl benzoate, glycidyl acetate, glycidyl butyrate, spiroglycol diglycidyl ether, reduced maltose polyglycidyl ether, bisphenol A diglycidyl ether, hydrogenated bisphenol A diglycidyl ether, bisphenol G diglycidyl ether, bisphenol G diglycidyl ether, tetramethylbisphenol A diglycidyl ether, bisphenol hexafluoroacetone diglycidyl ether, bisphenol C diglycidyl ether, 1,3-bis(1-(2,3-epoxypropoxy)-1-trifluoromethyl-2,2,2-trifluoroethyl)benzene, 1,4-bis(1-(2,3-epoxypropoxy)-1-trifluoromethyl-2,2,2-trifluoroethyl)benzene, 4,4'-bis(2,3-epoxypropoxy)octafluorobiphenyl, tetraglycidyl-m-xylylenediamine, tetraglycidyldiaminodiphenylmethane, triglycidyl-paraaminophenol, triglycidyl-metaminophenol, diglycidylaniline, diglycidyltribromoaniline, tetraglycidylbisaminomethylcyclohexane, tetrafluoropropylglycidyl ether, octafluoropentylglycidyl ether, dodecafluorooctyldiglycidyl ether, styrene oxide, limonene diepoxide, limonene monoxide, α-pinene epoxide, and β-pinene epoxide.

Examples of the compound for adjusting the viscosity of the photosensitive substance to 500 cps to 10,000 cps, which is described in claim 1 of the invention, are not only the reactive oligomer described in claim 2 of the invention, but also compounds such as bisphenol A epoxies, bisphenol S epoxies, spiro ring epoxies, bisphenol A divinyloxy ether, hydroquinone divinyloxyethyl ether, hydroquinone diglycidyl ether, tetraphthalic acid diglycidyl ether, fluorinated epoxies, alicyclic epoxies, carbo epoxies, naphthalene epoxies, dicyclopentadiene type epoxies, brominated epoxies, cyanate ester epoxies, phenol novolak epoxies, cresol novolak epoxies, and vinyl ether epoxies.

The present invention will now be described in greater detail by way of the following embodiments, but it should be understood that the invention is not restricted thereby.

Embodiment 1

From 25 wt.% of a reactive oligomer having the following structural formula

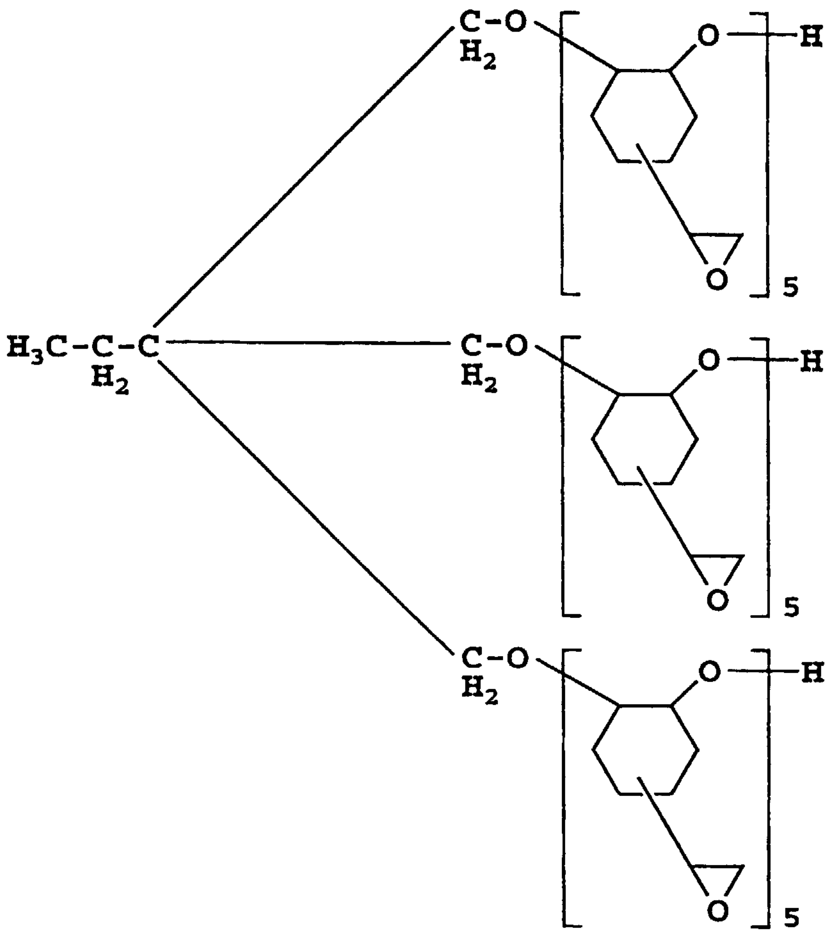

and 2 wt.% of a photopolymerization initiator, a photosensitive resin material (A) with an adjusted viscosity of 2,000 cps was prepared.

The refractive index of the photosensitive resin material (epoxy resin) (A) after being cured was 1.535 at a wavelength of 0.85 μm.

Then, as shown in Fig. 5, a photosensitive resin material (B) with a viscosity of 1,500 cps comprising 40 wt.% of a reactive oligomer and 2 wt.% of a photopolymerization initiator was coated onto a silicon substrate 3 by spin coating. The entire coating was irradiated with ultraviolet light (UV light) 4 to prepare an under cladding layer 5.

Then, as shown in Fig. 6, the resin material (A) was coated onto the under cladding layer 5 by spin coating to form a coating layer 6. The refractive index of the under cladding layer 5 after being cured was 1.52 at a wavelength of 0.85 μm.

Then, the composite was irradiated with UV light 4, as shown in Fig. 7, through a mask 7 having a waveguide pattern as shown in Fig. 8. The dose of irradiation was 2,000 $mJ/cm^2$. Then, this specimen was developed with an organic solvent, whereby a 40 μm wide ridge pattern 8 as shown in Fig. 9 was prepared according to the pattern of the mask 7, because only the light-irradiated areas of the liquid epoxy oligomer had been cured.

Then, as shown in Fig. 10, a photosensitive resin material (C) with a viscosity of 1,500 cps, which was to have a refractive index of 1.52 at a wavelength of 0.85 μm after curing, was coated onto the ridge pattern 8 and the under cladding layer 5. The coated specimen was irradiated with UV light 4 for curing to prepare an upper cladding layer 10. By this procedure, there was produced a multi-mode channel waveguide having the under cladding layer 5 and the upper cladding layer 10, each layer composed of the UV-curing epoxy resin and having a refractive index of 1.52, and a core 9 comprising the UV-curing epoxy resin and having a refractive index of 1.535.

The resulting optical waveguide was cut to a length of 5 cm with a dicing saw, and measured for insertion loss. The insertion loss was 0.5 dB or less at a wavelength of 0.85 μm, and 1.5 dB or less at a wavelength of 1.3 μm. Variation in the coupling loss was 0.3 dB. The polarization dependence of the insertion loss was 0.1 dB or less even at a wavelength of 1.3 μm. The loss of this optical wavelength remained unchanged for more than 1 month under the conditions 75°C/90% RH. The optical waveguide was found to be heat resistant at a temperature of 100°C or higher. Embodiment

2

In the same manner as in Embodiment 1, a photosensitive resin material with a viscosity of 1,500 cps comprising 22 wt.% of a reactive oligomer and 2 wt.% of a photopolymerization initiator was coated onto a silicon substrate by spin coating. The entire coating was irradiated with ultraviolet light (UV light) to prepare an under cladding layer. The refractive index of the photosensitive resin material (epoxy resin) after being cured was 1.520 at a wavelength of 0.85 μm and its film thickness was 50 μm.

Then, a resin material (refractive index after curing: 1.535, viscosity: 2,000 cps) was coated onto the under cladding layer by spin coating. Thereafter, the composite was irradiated with UV light through a mask having a waveguide pattern. Then, this specimen was developed with an organic solvent, whereby a 50 μm wide ridge pattern was prepared according to the pattern of the mask, because only the light-irradiated areas of the liquid epoxy oligomer had been cured. Then, the same photosensitive resin material (C) as the under cladding layer was coated, followed by irradiation with UV light 4 for curing to prepare an upper cladding layer. By this procedure, a multi-mode optical waveguide corresponding to a 50 μm multi-mode optical fiber was produced. The resulting optical waveguide was stripped from the substrate to prepare a film-shaped waveguide. The resulting film-form optical waveguide was cut to a length of 5 cm, and measured for insertion loss. The insertion loss was 0.5 dB or less at a wavelength of 0.85 μm, and 1.5 dB or less at a wavelength of 1.31 μm. Variation in the coupling loss was 0.3 dB. The optical waveguide was found to be heat resistant at a temperature of 150 °C or higher. Even when the optical waveguide was bent to a bend radius of about 5 mm, an increase in the loss at a wavelength of 0.85 μm was within 0.1 dB.

Embodiment 3

A mirror was prepared at an end face of the optical waveguide of the above Embodiment 2 to construct a 1 cm long optical waveguide for conversion to a vertical optical path. The insertion loss of this optical waveguide was 0.5 dB at a wavelength of 0.85 μm, and its mirror loss was 0.4 dB. This optical waveguide was confirmed to have heat resistance at a temperature of 150°C or higher. This optical waveguide was used as a connector between a surface light emitting laser array with a wavelength of 0.85 μm and an optical fiber. As a coupling loss, 3 dB or less was found. This optical waveguide was also usable in connecting a PD array to an optical fiber, and a coupling loss of 3 dB or less was confirmed.

Not only the linear optical waveguide shown in this embodiment, but also a coupling and branching element of a multi-mode optical waveguide, a star coupler, etc. were produced. In any of these cases, the waveguide loss was 0.1 dB/cm or less at a wavelength of 0.85 μm.

Embodiment 4

In the same manner as in Embodiment 1, a photosensitive resin material with a viscosity of 1,500 cps comprising 22 wt.% of a reactive oligomer and 2 wt.% of a photopolymerization initiator was Coated onto a silicon substrate by spin coating. The entire coating was irradiated with ultraviolet light (UV light) to prepare an under cladding layer. The refractive index of the photosensitive resin material (epoxy resin) after being cured was 1.510 at a wavelength of 0.85 μm.

Then, a resin material (viscosity: 10,000 cps, refractive index after curing: 1.54) was coated onto the under cladding layer by spin coating. Thereafter, the composite was irradiated with UV light through a mask having a waveguide pattern. Then, this specimen was developed, whereby a 200 μm wide ridge pattern was prepared according to the pattern of the mask, because only the light-irradiated areas of the liquid epoxy oligomer had been cured. Then, the same photosensitive resin material as the under cladding layer was coated, followed by irradiation with UV light for curing to prepare an upper cladding layer. By this procedure, a multi-mode channel waveguide for PCF was produced. The resulting optical waveguide was cut to a length of 5 cm with the use of a dicing saw, and measured for insertion loss. The insertion loss was 0.5 dB or less at a wavelength of 0.85 μm, and 1.5 dB or less at a wavelength of 1.31 μm. Variation in the coupling loss was 0.3 dB. The loss of this optical wavelength remained unchanged for more than 1 month under the conditions 75°C/90% RH. The optical waveguide was found to be heat resistant at a temperature of 100°C or higher.

It was also possible to produce a coupling and branching optical waveguide ($n \times m$) and a star coupler in addition to a linear optical waveguide. With any of the products, the loss was 0.1 dB/cm or less at a wavelength of 0.85 μm, and the excess loss at the branched portion was also within 0.5 dB.

Embodiment 5

A single-mode optical waveguide was produced in the same manner as in Embodiment 1. From 30 wt.% of a reactive oligomer having the following structural formula

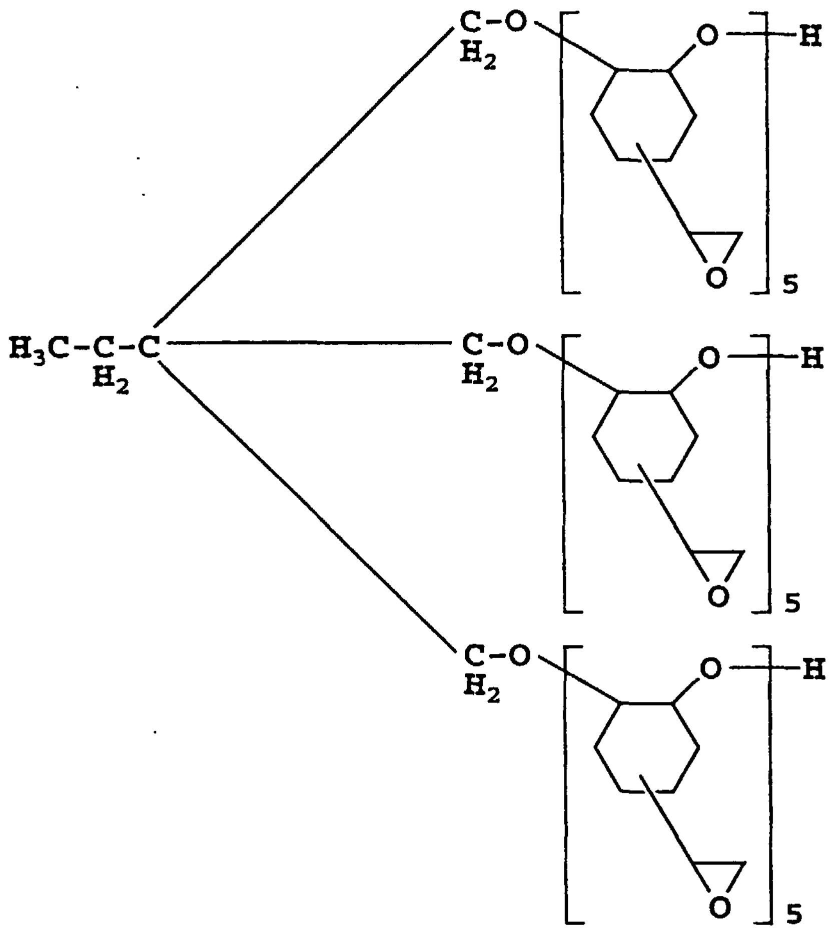

and 2 wt.% of a photopolymerization initiator, a photosensitive resin material (D) with an adjusted viscosity of 2,500 cps was prepared.

The refractive index of the photosensitive resin was 1.50 at a wavelength of 1.3 μm.

Then, as shown in Fig. 11, a photosensitive resin material (E) with a viscosity of 1,800 cps comprising 24 wt.% of a reactive oligomer and 2 wt.% of a photopolymerization initiator was coated onto a silicon substrate 11 by spin coating. The entire surface of the coating was irradiated with ultraviolet light (UV light) 12 to prepare an under cladding layer 13.

Then, as shown in Fig. 12, the resin material (D) was coated onto the under cladding layer 13 by spin coating to form a coating layer 14. Then, the coating layer 14 was irradiated with UV light 12, as shown in Fig. 13, through a mask 15 having a waveguide pattern as shown in Fig. 14. The dose of irradiation was 2,000 mJ/$cm^2$.

Then, this specimen was developed with an organic solvent, whereby an 8 μm wide ridge pattern 16 as shown in Fig. 15 was prepared according to the pattern of the mask 15, because only the light-irradiated areas of the liquid epoxy oligomer had been cured. The refractive index of the ridge pattern 16 after being cured was 1.504 at a wavelength of 1.3 μm. Then, as shown in Fig. 16, a photosensitive resin material (F) which was to have a refractive index of 1.50 at a wavelength of 1.3 μm when photocured, was coated onto the ridge pattern 16 and the under cladding layer 13. The coating was irradiated with UV light 12 for curing to prepare an upper cladding layer 18. By this procedure, there was produced a single-mode channel waveguide having the under cladding layer 13 and the upper cladding layer 18, each layer composed of the UV-curing epoxy resin and having a refractive index of 1.50, and a core 17 comprising the UV-curing epoxy resin and having a refractive index of 1.504.

The resulting optical waveguide was cut to a length of 5 cm with a dicing saw, and measured for insertion loss. The insertion loss was 3 dB or less at a wavelength of 1.3 μm, and variation in the coupling loss was 0.4 dB. The polarization dependence of the insertion loss was 0.1 dB or less even at a wavelength of 1.3 μm. The loss of this optical wavelength remained unchanged for more than 1 month under the conditions 75°C/90% RH. The optical waveguide was found to be heat resistant at a temperature of 100°C or higher.

It was also possible to produce not only the linear optical waveguide shown in this embodiment, but also a multiplexing and demultiplexing element of a single-mode optical waveguide, a directional coupler, and a coupling and branching element.

As described above, the method for producing an optical waveguide according to the present invention is a very simple method. The optical waveguide of the present invention produced by this method for production is a high quality polymer optical waveguide. Based on these facts, the polymer optical waveguide in accordance with the present invention is advantageous for application to optical waveguide type parts which require mass production. Thus, the present invention can be applied favorably to various optical waveguides, integrated optics or optical distributing boards used in the fields of general optics or microoptics, and also in the fields of optical communication and optical information processing.

The present invention has been described in detail with respect to preferred embodiments, and it will now be apparent from the foregoing to those skilled in the art that changes and modifications may be made without departing from the invention in its broader aspects, and it is the invention, therefore, in the appended claims to cover all such changes and modifications as fall within the true spirit of the invention.

## Claims

1. An optical waveguide characterized by comprising a core or a cladding which is a film of a polymer obtained by ultraviolet curing a photosensitive substance, wherein the photosensitive substance comprises a mixture of two or more of reactive oligomers and a photopolymerization initiator, the reactive oligomers each contains at least one epoxy ring, at least one of the reactive oligomers in the mixture contains an aromatic ring, the refractive index of the polymer can be controlled by changing the content of the at least one reactive oligomer, and the photosensitive substance has a viscosity adjusted to 500 cps to 10,000 cps.

2. The optical waveguide as claimed in claim 1, characterized in that one of the reactive oligomers constituting the photosensitive substance is expressed by the following general formula (I)

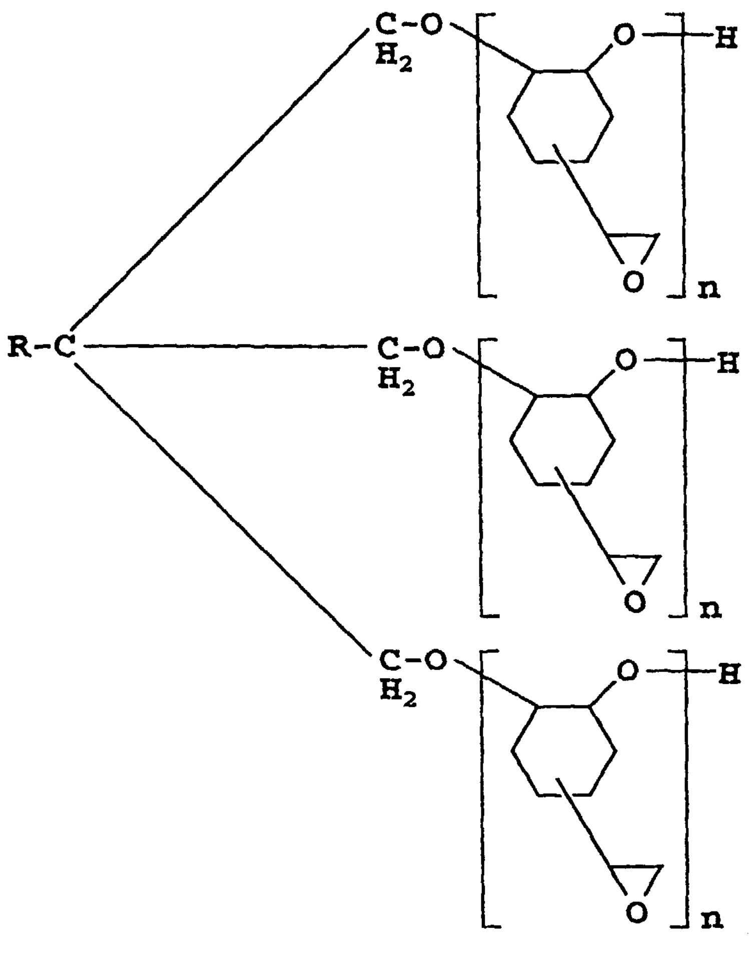

(I)

where R is $C_mX_{2m+1}$, where m is a natural number, and X is a hydrogen atom, a heavy hydrogen atom, or a halogen group, and n is a natural number, and the viscosity of the photosensitive substance can be adjusted by changing the content of the one reactive oligomer.

**3.** The optical waveguide as claimed in claim 1, characterized in that the at least one reactive oligomer constituting the photosensitive substance contains the aromatic ring of the following general formula (II)

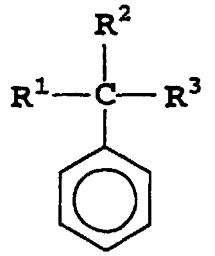

(II)

where $R^1$, $R^2$ and $R^3$ are $C_mX_{2m+1}$ or $C_6X_{5-n}Y_n$, where m and n are each a natural number, and X and Y are a hydrogen atom, a heavy hydrogen atom, or a halogen group, and $R^1$, $R^2$ and $R^3$ each have at least one epoxy ring, and the refractive index of the polymer has been controlled by changing the content of the at least one reactive oligomer.

**4.** A method for producing an optical waveguide, characterized by comprising:

forming an under cladding layer from a film of a polymer prepared by irradiating a photosensitive substance with light, said photosensitive substance being the photosensitive substance described in claim 1, or a photosensitive substance containing the reactive oligomer of the general formula (I), or a photosensitive substance containing the reactive oligomer of the general formula (II);
the forming on the under cladding layer a layer of the photosensitive substance described in claim 1, or a photosensitive substance containing the reactive oligomer of the general formula (I), or a photosensitive substance containing the reactive oligomer of the general formula (II), each photosensitive substance being to have a refractive index adjusted to become higher than that of the under cladding layer when polymerized by irradiation with light;
irradiating the layer of the photosensitive substance with condensed light through a mask, or directly, to form a latent image in a pattern form, followed by removing non-irradiated areas with a solvent to form a pattern for use as a core portion for passage of light; and
then coating the core portion, and an upper portion in the surroundings thereof, with the photosensitive substance described in claim 1, or a photosensitive substance containing the reactive oligomer of the general formula (I), or a photosensitive substance containing the reactive oligomer of the general formula (II), each photosensitive substance being to have a refractive index adjusted to become lower than that of the core portion when polymerized, and polymerizing the coated photosensitive substance by irradiation with ultraviolet light to form an upper cladding layer.

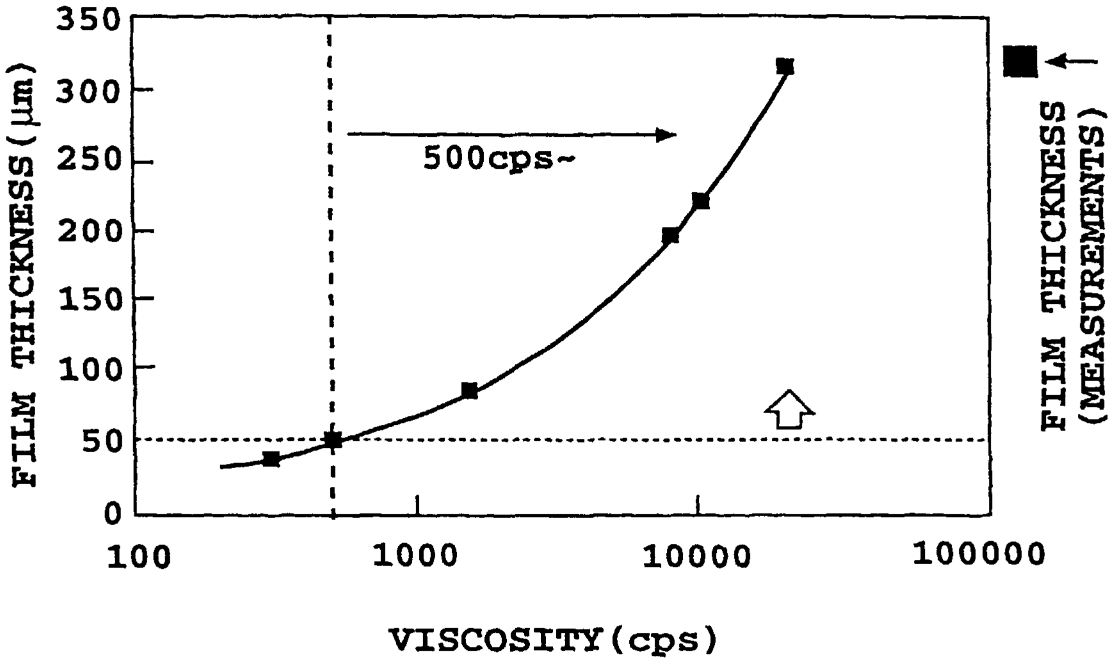
350
300
250
200
150
100
50
0
FILM THICKNESS (μm)
500cps~
100
1000
10000
100000
VISCOSITY (cps)
FILM THICKNESS (MEASUREMENTS)

FIG. 1

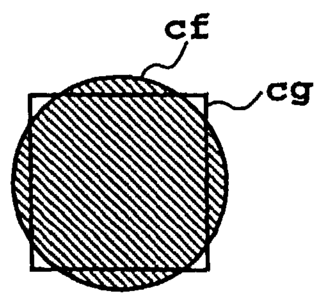
cf
cg

FIG. 2

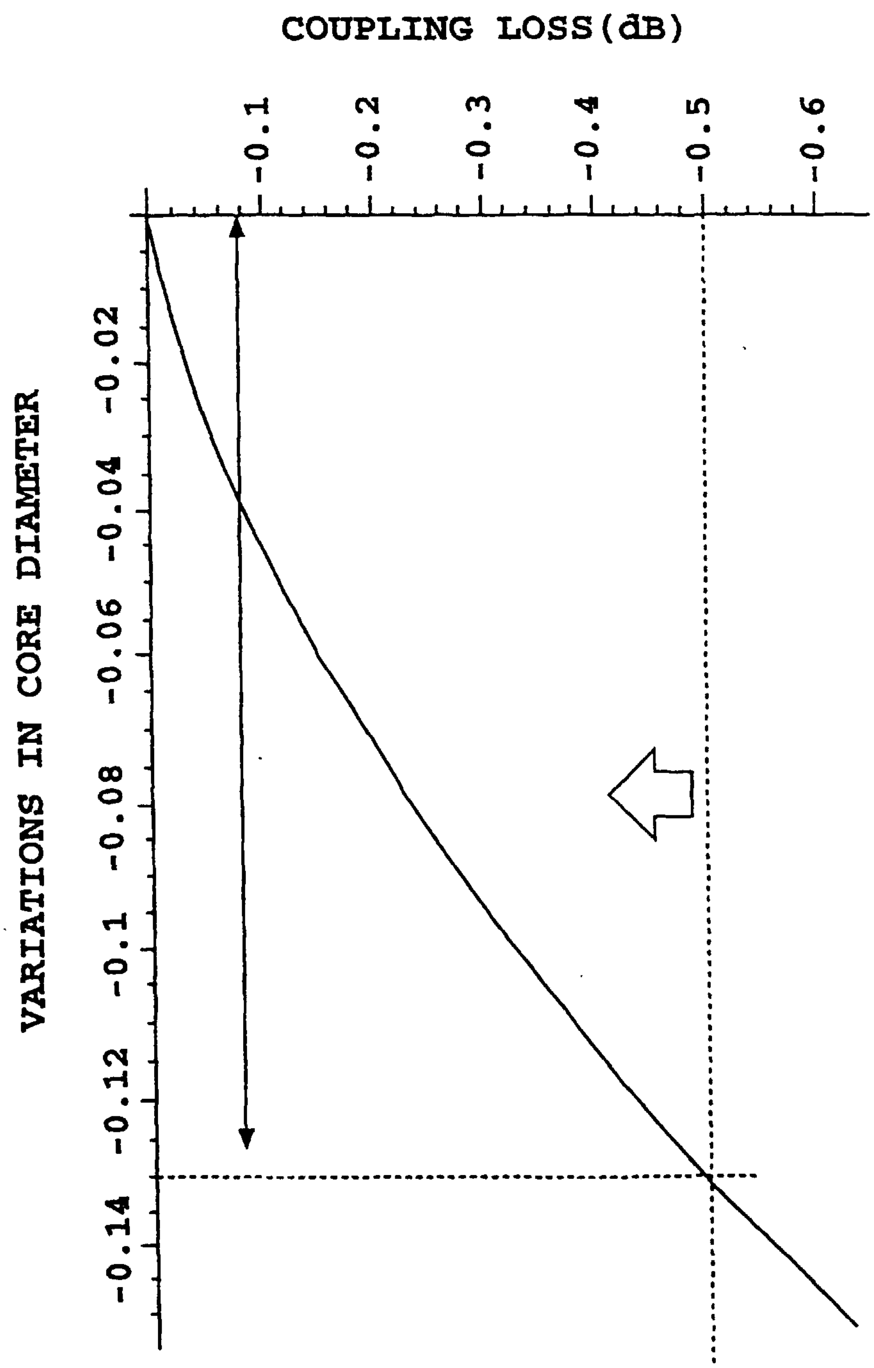
COUPLING LOSS(dB)
-0.1
-0.2
-0.3
-0.4
-0.5
-0.6
VARIATIONS IN CORE DIAMETER
-0.02
-0.04
-0.06
-0.08
-0.1
-0.12
-0.14

FIG.3

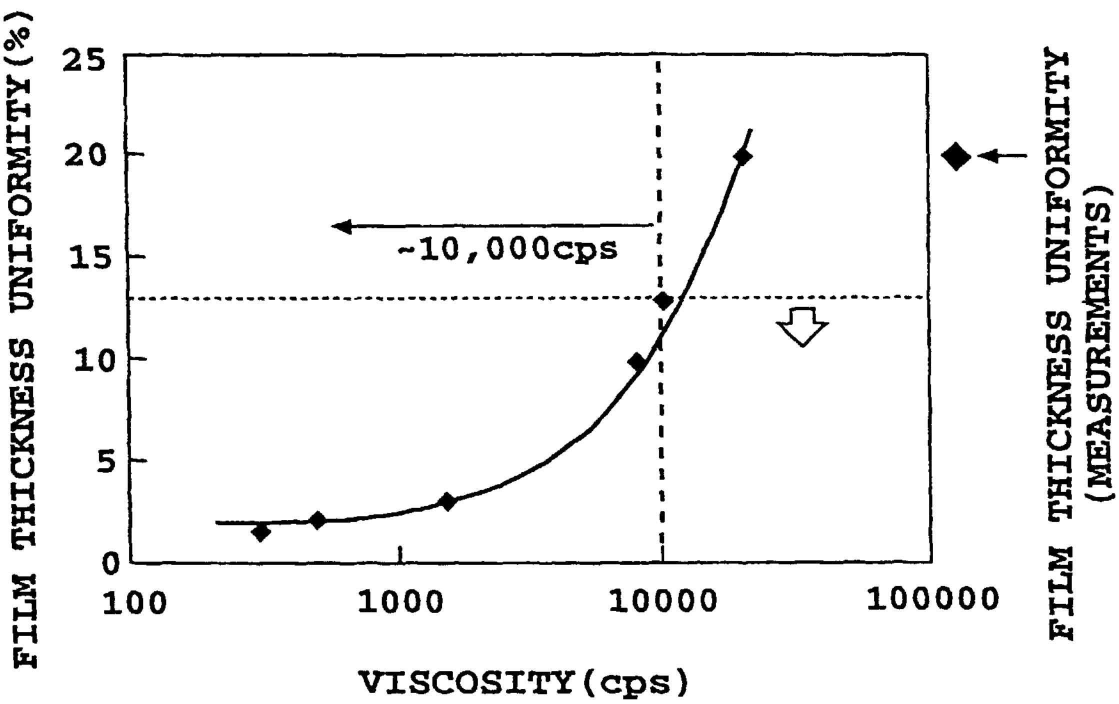
FILM THICKNESS UNIFORMITY(%)
25
20
15
10
5
0
100
1000
10000
100000
~10,000cps
VISCOSITY(cps)
FILM THICKNESS UNIFORMITY (MEASUREMENTS)

FIG.4

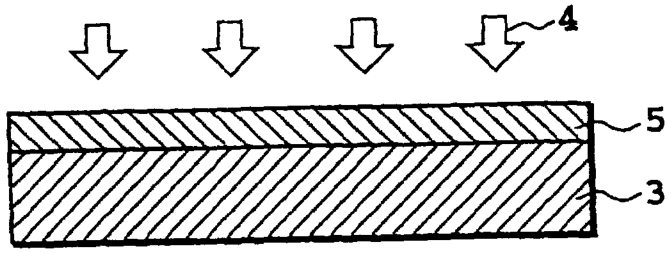


FIG.5

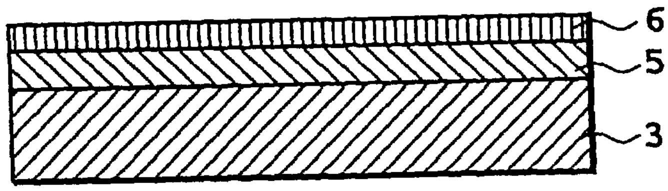


FIG.6

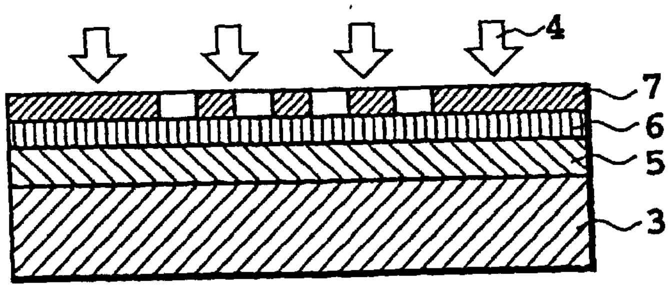


FIG.7

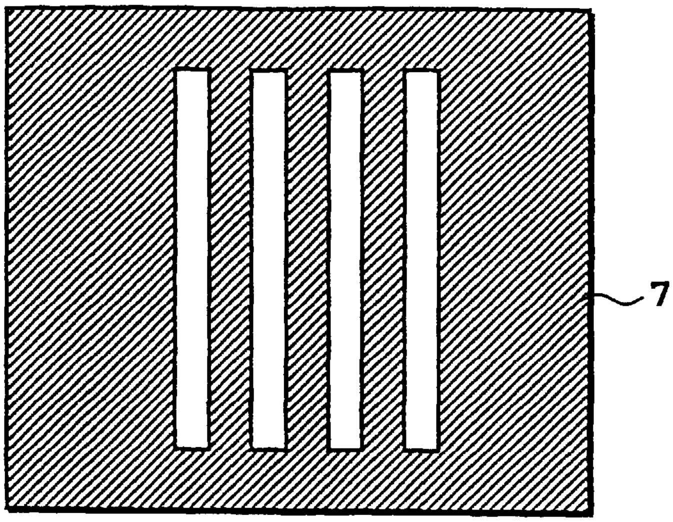


FIG.8

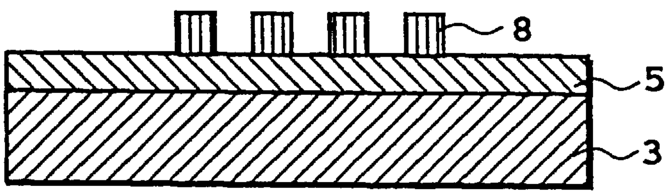


FIG.9

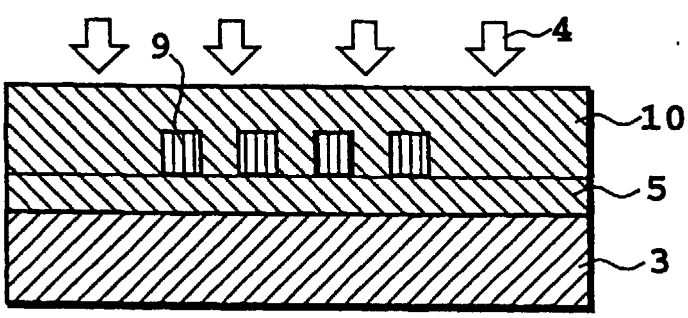


FIG.10

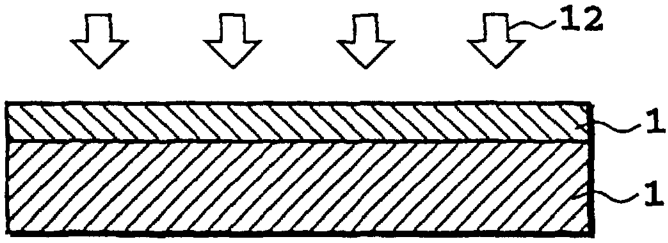


FIG.11

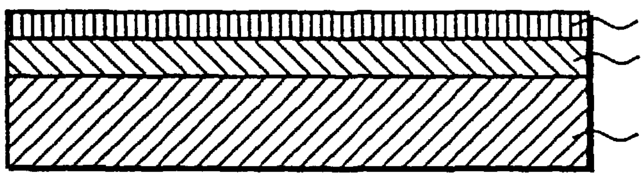


FIG.12

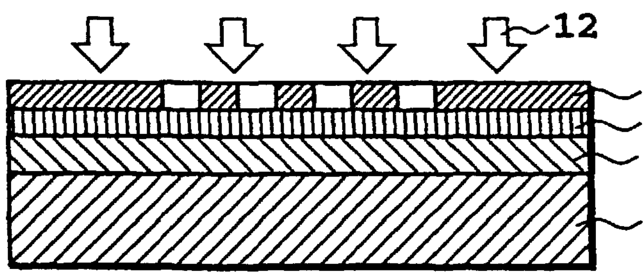


FIG.13

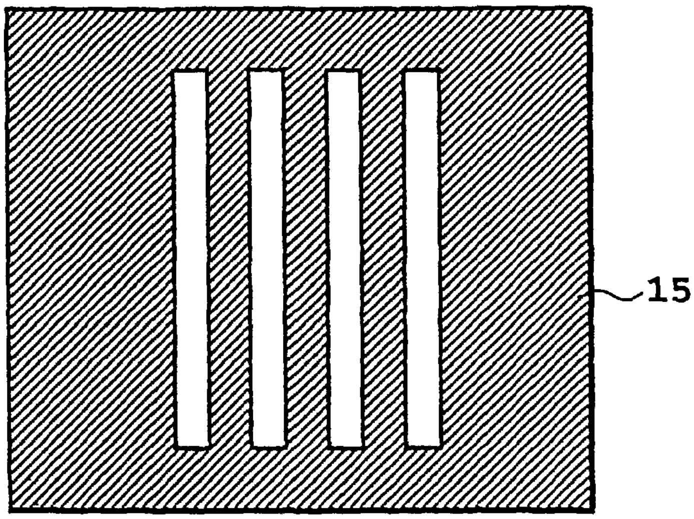


FIG.14

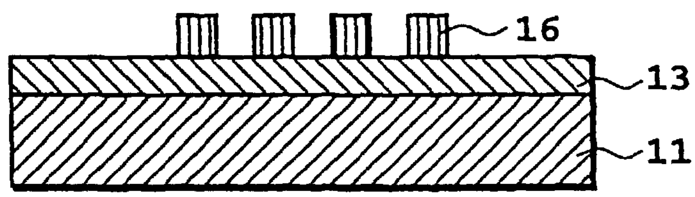


FIG.15

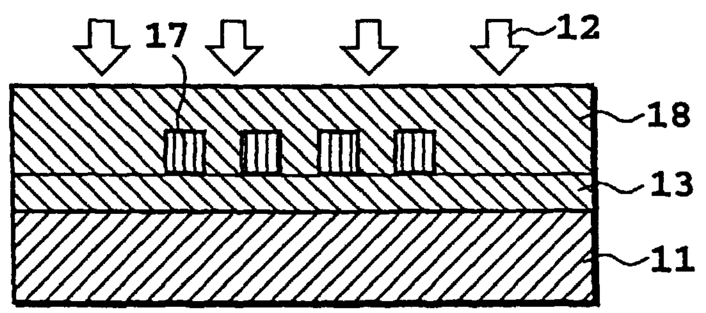


FIG.16